# EUROPEAN PATENT APPLICATION

(11) **EP 2 249 202 A1**
(43) Date of publication of application: **10.11.2010**
(21) Application number: 10161511.0
(22) Date of filing: 29.04.2010
(51) Int. Cl.: G02F 1/225, G02B 6/10, H04B 10/135

(54) **Modulation of unpolarized light**

(30) Priority: 08.05.2009 US 437953
(71) Applicant: Honeywell International Inc., Morristown, NJ 07962 (US)
(72) Inventor: Laskoskie, Clarence E., Morristown, NJ 07962-2245 (US)
(74) Representative: Buckley, Guy Julian

(57) **Abstract**

System and method for effectuating substantially uniform modulation of unpolarized light. Unpolarized light is split into two beams, each beam comprising a different orthogonal mode. The mode of one beam is changed and then the beam is modulated. The other beam is modulated and then its mode is changed. The two modulated beams are combined to form a modulated multi-mode signal.

## Description

### BACKGROUND OF THE INVENTION

In some optical applications, unpolarized light is desired. In many of those applications it is desirable to modulate the unpolarized light. However, uniform modulation of unpolarized light is difficult to accomplish without excessive loss and/or chirp (i.e. parasitic phase modulation).

Optical amplifying- or attenuating- type modulators can provide uniform modulation of intensity but at the cost of high chirp. Interferometer-type intensity modulators (e.g. Mach-Zehnder interferometers) formed in electro-optic materials such as Lithium-Niobate can provide chirp-free modulation, but the electro-optic (EO) coefficient is different for the TM and TE polarizations. In other words, a given voltage applied to the electrodes causes the phase delay impressed on the TE mode to differ by a factor of about 3 from the phase delay impressed on the TM mode due to the difference in EO coefficients for the two polarizations. This difference in EO coefficients results in non-uniform intensity modulation for the two polarizations. Phase modulators made using waveguide modulators in Lithium-Niobate also suffer non-uniform phase modulations for the TE and TM polarizations as well. Due to these limitations, Lithium-Niobate modulators are typically used as polarizing or single polarization devices. These Lithium-Niobate devices are typically fabricated such that they extinguish the TM polarization and only make use of the TE polarized portion. Extinguishing the TM polarization limits the versatility of the modulator and also leads to wasted or underutilized power.

### SUMMARY OF THE INVENTION

The present invention provides systems and methods for modulating unpolarized light. The system includes a light source configured to output unpolarized (or arbitrarily polarized) light, a circulator in optical communication with the light source, and a modulation component in optical communication with the circulator. The unpolarized light includes two single-mode beams having substantially orthogonal polarizations. The modulation component modulates the two single-mode, single-polarization beams associated with the multi-mode, unpolarized light emitted from the light source. The two single-mode beams are both modulated in one of two orthogonal mode, such as TE or TM modes. A modulated signal is output to the circulator.

In one embodiment, the modulation component includes a first optical path in optical communication with a modulator, a second optical path in optical communication with a splice, and a third optical path in optical communication with the splice and the modulator. The modulator modulates either phase or intensity. The optical paths in the modulation component include single-mode, polarization-maintaining fiber (PMF). The multi-mode light is split and the beams are combined by one or more commercially available optical components.

In accordance with further aspects of the invention, the method includes receiving a multi-mode light, modulating two single-mode beams associated with the multi-mode light, and outputting a modulated signal based on the two modulated single-mode beams.

In accordance with other aspects of the invention, the multi-mode light is split into the two single-mode beams. The mode of the first single-mode beam is changed prior to modulating and the mode of the second single-mode beam is changed after modulating. The two modulated single-mode beams are combined to form the modulated signal.

As will be readily appreciated from the foregoing summary, the invention provides systems and methods for modulating unpolarized light.

### BRIEF DESCRIPTION OF THE DRAWINGS

Preferred and alternative embodiments of the present invention are described in detail below with reference to the following drawings:
FIGURE 1 is a schematic view of a system for modulating unpolarized light in accordance with the present invention;
FIGURE 2 is a schematic view of the invention showing the specific orientations and direction of travel of light beams traveling in the modulation system in accordance with the present invention; and
FIGURE 3 is a schematic view of an intensity modulator in accordance with an embodiment of the present invention.

### DETAILED DESCRIPTION OF THE INVENTION

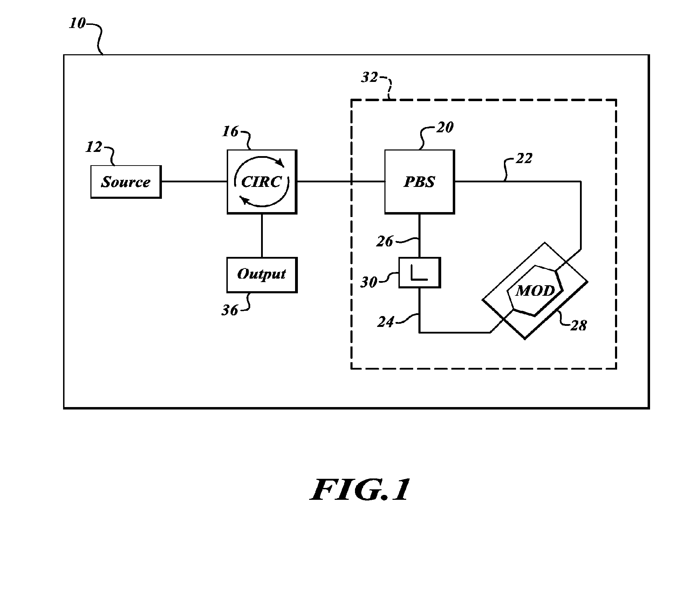

FIGURE 1 shows a modulation system 10, which includes a light source 12, a circulator 16, and a modulation component 32. A first optical pathway facilitates optical communication between the light source 12 and the circulator 16. A second optical pathway facilitates optical communication between the circulator 16 and the modulation component 32. The circulator 16 is also in optical communication with an output 36.

The modulation component 32 includes a polarization beam splitter/combiner (PBSC) 20, a modulator 28, and an optical splice 30. A third optical pathway 22 facilitates optical communication between the PBSC 20 and the modulator 28. A fourth optical pathway 24 facilitates optical communication between the modulator 28 and the splice 30. A fifth optical pathway 26 facilitates optical communication between the splice 30 and the PBSC 20. The modulation component 32 is configured such that beams of light may propagate in both a clockwise (CW) and a counter-clockwise (CCW) direction.

Generally, it is desirable to minimize the length of the optical pathways in the modulation component 32 because excess lengths may result in undesirable delays in transmitting the modulated signal. Excess length also increases the difficulty in matching propagation times for the CW and CCW beams between the PBSC 20 and the modulator 28. Differences in arrival times at the modulator 28 cause the beams to experience different modulation depths resulting in signal distortion and limits to usable modulation rates. Limits to the operational speed of the modulation component 32 can impose design constraints.

The first and second optical pathways include standard single-mode fiber (SMF), which allows unpolarized light to propagate there through. Standard single-mode fibers do not control polarization states allowing the polarization to wander (or evolve) as light propagates there through. In contrast, it is undesirable to propagate light having uncontrolled polarization modes through the third, fourth, or fifth optical pathways 22, 24, 26. Accordingly, single-mode polarization-maintaining optical fibers (PMF) are used for the third, fourth, and fifth optical pathways 22, 24, 26. A PMF allows light to propagate only in the polarization mode into which it was launched.

The light source 12 is a standard, commercially available optical component configured to output unpolarized or arbitrarily polarized light (i.e. a multi-mode light beam). Examples of the light source 12 include, but are not limited to, an Erbium-doped fiber light source or a tunable laser coupled to standard SMF fiber.

The circulator 16 is a standard, commercially available optical component. The circulator 16 acts as a signal router, transmitting the multi-mode light beam from the light source 12 to the modulation component 32. Additionally, the circulator 16 directs a modulated unpolarized signal from the modulation component 32 to the output 36. The circulator 16 also protects the light source 12 from light (i.e. power) output from the modulation component 32. An example circulator is part number FOC-12P-111-8/125-PPP-480-60-XXX-1-1 manufactured by Oz Optics.

The PBSC 20 has two main functions: split the multi-mode light beam into separate polarized beams and combine two modulated single-mode beams to form a modulated unpolarized signal. Specifically, the PBSC 20 splits the multi-mode beam received from the circulator 16 into two separate beams, the beams having substantially different orthogonal modes. The polarization modes are the TE and the TM. The mode is determined based on the orientation of the mode relative to the PBSC 20. The TE and the TM modes are orthogonal to each other. The PBSC 20 directs the first beam into the third optical pathway 22 and the second beam into the fifth optical pathway 26. In this embodiment, the TE beam is the first beam and the TM beam is the second beam. The PBSC 20 is a standard, commercially available optical component.

In addition to splitting unpolarized light, the PBSC 20 also combines polarized beams of different modes (e.g. TE and TM) into one multi-mode signal. Specifically, the PBSC 20 combines a modulated single-mode beam from the third optical pathway 22 with a modulated single-mode beam from the fifth optical pathway 26 to form a combined multi-mode modulated beam, which is outputted to the second optical path towards the circulator 16. In one embodiment, the beam splitting and beam combining operations are combined into one integrated device. An example PBSC is Part Number FOBS-12N-111-9/125-SPP-1550-PBS-50-XXX-1-1 manufactured by Oz Optics.

The modulator 28 modulates beams from both the third optical pathway 22 and the fourth optical pathway 24. In one embodiment, the modulator 28 contains waveguides formed in Lithium-Niobate or other glass-like material, which modulate at sub-Gigahertz frequencies. The modulator 28 may be configured to modulate intensity and/or phase. As will be discussed in more detail below, intensity modulation typically requires the addition of electrodes to provide a voltage differential at the modulator 28. An exemplary modulator is a Mach-Zehnder modulator. An example Mach-Zehnder modulator is described in U.S. Patent No. 6,198,854, which is hereby incorporated by reference.

The splice 30 rotates the light 90 degrees to a different mode. More specifically, the splice 30 rotates fiber ends relative to each other to effect polarization rotation. Simply put, splice refers to an optical device that changes the mode of the beam from TM to TE and vice-versa. The splice 30 is accomplished using standard, commercially available optical equipment and procedures.

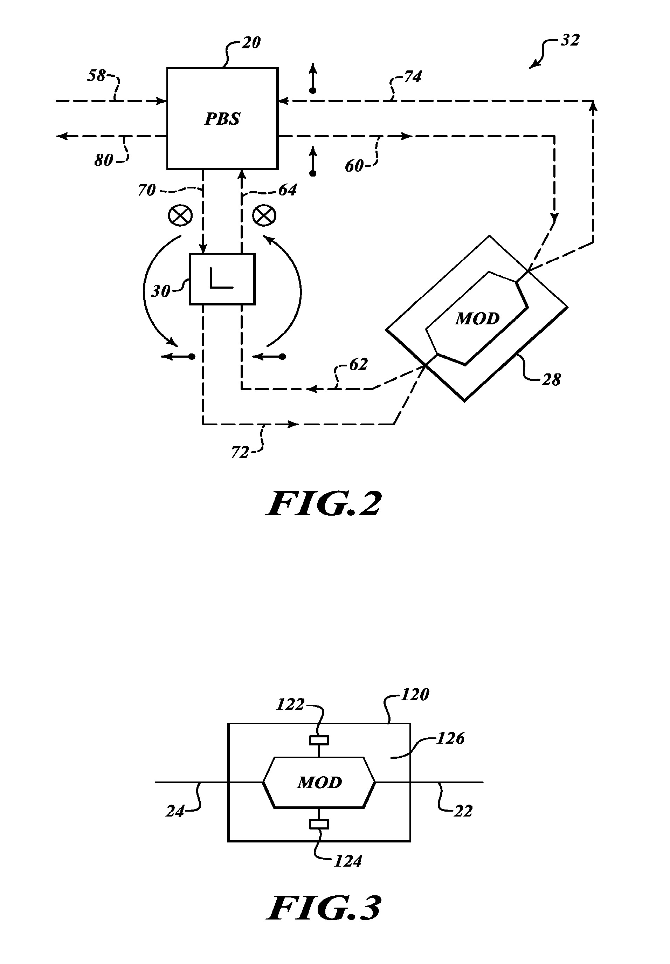

FIGURE 2 shows the orientation of the beams in the modulation system 10 during operation. Unpolarized light from the light source 12 propagates from the circulator 16 in a first direction 58 to the PBSC 20, which splits the unpolarized light into two beams. The two beams each have a different mode (e.g. either TM or TE). The first beam is initially in the TE mode. The PBSC 20 directs the first beam in a first CW direction 60 to the modulator 28 where the first beam is modulated. From the modulator 28 the (modulated) first beam propagates in a second CW direction 62 to the splice 30. The splice 30 rotates the orientation of the first beam 90 degrees, i.e. changing the mode of the modulated first beam from the TE mode to the TM mode. From the splice 30 the modulated TM first beam propagates in a third CW direction 64 to the PBSC 20.

The second beam is directed from the PBSC 20 in a first CCW direction 70 to the splice 30. The second beam is initially in the TM mode. The splice 30 rotates the orientation of the second beam by 90 degrees, i.e. changing the mode of the second beam from the TM mode to the TE mode. The second beam in the TE mode propagates in a second CCW direction 72 to the modulator 28 where the second beam is modulated. The modulated second beam in the TE mode propagates in a third CCW direction 74 to the PBSC 20. At the PBSC 20, the modulated first beam and the modulated second beam are combined to form a modulated multi-mode signal. From the PBSC 20, the modulated multi-mode signal propagates in a second direction 80 to the circulator 16. The circulator 16 directs the modulated multi-mode signal to the output 36. The modulated multi-mode signal includes substantially uniform modulation in both the TM and TE modes.

FIGURE 3 shows an intensity modulator 120 in accordance with an alternative embodiment of the present invention. Electrodes 122, 124 provide for modulating the phase of the light passing through the modulator 120. Intensity of the light passing through the modulator is modulated by synthesizing phase modulated light. The modulator 120 is formed in a substrate 126, which is a glass-type material such as Lithium-Niobate.

While the preferred embodiment of the invention has been illustrated and described, as noted above, many changes can be made without departing from the spirit and scope of the invention. Circularly polarized light or spatial modes could be used, which would be split by the PBSC 20 into beams having substantially orthogonal modes other than TE and TM. Additionally, other types of optical pathways capable of transmitting unpolarized light may be utilized for the first and second optical pathways. Directional coupling devices, such as 2 x 2 fused-tapered fiber couplers, may be used in place of the circulator 16. Alternative types of single-mode fibers, polarization-maintaining fibers or other optical pathways could be utilized. Various types of modulators could be utilized for the modulator 28. Different configurations of components could also be utilized. As an example, the CCW and CW paths could be reversed while rearranging some of the components. Also, separate beam splitter and beam combiner components could be utilized. Accordingly, the scope of the invention is not limited by the disclosure of the preferred embodiment. Instead, the invention should be determined entirely by reference to the claims that follow.

## Claims

1. A system comprising:
a light source (12) configured to produce a multi-mode beam;
a circulator (16) in optical communication with the light source; and
a component (32) in optical communication with the circulator, the component configured to receive the multi-mode beam from the light source via the circulator, and modulate two substantially orthogonal single-mode beams associated with the received multi-mode beam, wherein the two substantially orthogonal single-mode beams are both modulated in one of two orthogonal modes, and output to the circulator a modulated signal based on the two modulated single-mode beams.

2. The system of claim 1, wherein the two orthogonal modes comprise TE mode and TM mode.

3. The system of claim 2, wherein the component comprises:
a splice (30) configured to change the mode of the two single-mode beams from TM to TE or from TE to TM; and
a modulator (28) configured to modulate the two single mode beams.

4. The system of claim 3, wherein the modulator is one of an intensity modulator or a phase modulator.

5. The system of claim 3, further comprising single-mode, polarization-maintaining fibers configured to facilitate the optical communication of the two single-mode beams between the splice, the modulator, a beam splitter, and a beam combiner.

6. The system of claim 3, wherein the component further comprises:
a beam splitter (20) configured to split the multi-mode beam into the two single mode beams.

7. The system of claim 6, wherein the component further comprises:
a beam combiner (20) configured to combine the two modulated single-mode beams and output the modulated signal.

8. The system of claim 7, wherein the beam splitter and the beam combiner comprise one integrated component.

9. The system of claim 3, wherein the modulator produces signals comprising sub-gigahertz frequencies.

10. A method of modulating unpolarized light comprising:
receiving a multi-mode beam;
modulating two single-mode beams associated with the received multi-mode beam; and
outputting a modulated signal based on the two modulated single-mode beams, wherein the two single-mode beams each comprise one of TE or TM modes.
